# EUROPÄISCHE PATENTSCHRIFT

(11) **EP 4 443 100 B1**
(45) Veröffentlichungstag und Bekanntmachung des Hinweises auf die Patenterteilung: **18.02.2026**
(21) Anmeldenummer: 23166777.5
(22) Anmeldetag: 05.04.2023
(51) Int. Cl.: G01B 5/20

(54) **ÜBERPRÜFUNG DER MASSHALTIGKEIT EINES WERKSTÜCKS MIT EINEM SCHALTENDEN MESSTASTER**
CHECKING THE DIMENSIONAL STABILITY OF A WORKPIECE WITH A SWITCHING MEASURING PROBE
VÉRIFICATION DE LA STABILITÉ DIMENSIONNELLE D'UNE PIÈCE À USINER AU MOYEN D'UN BOUTON DE MESURE À COMMUTATION

(43) Veröffentlichungstag der Anmeldung: 09.10.2024
(73) Patentinhaber: Siemens Aktiengesellschaft, 80333 München (DE)
(72) Erfinder: Kunis, Kathrin, 09228 Chemnitz (DE); Kunze, Patrick, 09236 Claußnitz (DE); Lorenz, Philipp, 09228 Wittgensdorf (DE)
(74) Vertreter: Siemens Patent Attorneys

(56) Entgegenhaltungen:
- EP-A1- 4 152 111
- WO-A1-2016/128074
- JP-A- 2013 094 899

## Beschreibung

Die Erfindung betrifft ein Verfahren zum Überprüfen einer Kontur eines Werkstücks mittels einer mit einer Steuereinrichtung verbundenen Werkzeugmaschine, wobei ein schaltender Messtaster in die Werkzeugmaschine eingespannt ist.

Ferner betrifft die Erfindung ein Werkzeugmaschinensystem zum Überprüfen einer Kontur eines Werkstücks, umfassend eine Werkzeugmaschine zur Bearbeitung des Werkstücks, eine mit der Werkzeugmaschine verbundene Steuereinrichtung sowie einem in eine Werkzeugaufnahme der Werkzeugmaschine eingespannten, schaltenden Messtaster mit einem Antastformelement.

Darüber hinaus betrifft die Erfindung einen digitalen Zwilling eines Werkzeugmaschinensystems zur Simulation eines Verfahrens zum Überprüfen einer Kontur eines Werkstücks mittels einer mit einer Steuereinrichtung verbundenen Werkzeugmaschine, in die ein schaltender Messtaster mit einem Antastformelement eingespannt ist.

Zum Überprüfen der Maßhaltigkeit von Werkstücken sind verschiedene Verfahren und die Verwendung unterschiedlicher Messmittel bekannt. Häufig wird hierbei auf eigens für die Vermessung von Werkstücken hergerichtete Messmaschinen oder Koordinatenmesssysteme bzw. Koordinatenmessgeräte zurückgegriffen. Diese umfassen häufig messende, taktile oder optische Wegmesssysteme, bei denen nicht nur eine Berührung, sondern auch eine Auslenkung des Messsystems bzw. ein Abstand zwischen Messsystem und Messobjekt erfasst werden kann.

Häufig werden zum Vermessen von Werkstücken lösbar mit der Messmaschine verbindbare, taktile Messtaster verwendet, bei denen zur Erfassung von Messwerten ein Antastformelement, in der Regel eine Messkugel, ein Messzylinder oder eine Messspitze, das Werkstück an der zu messenden Stelle der Werkstück-Oberfläche berührt. Messende, taktile Messtaster haben intern einen eigenen Messbereich, in der Regel von wenigen Millimetern. Der intern gemessene Sensorwert wird dabei mit der von den Achswerten der Messmaschine abgeleiteten Position des Messtasters im jeweiligen Messpunkt überlagert. Nachteilig bei derartigen Messsystemen ist jedoch, dass diese verhältnismäßig teuer sind und weiterhin Ressourcen (Rechenleistung, eine entsprechende Software zum Erfassen und Auswerten der Messwerte etc.) bei der Messmaschine vorhanden sein müssen.

Daneben sind auch bei einer Berührung des Messobjekts schaltende Messtaster bekannt, die beim Aufnehmen eines Messpunktes lediglich ein Schaltsignal (Triggersignal) liefern, welches das Auslesen der aktuellen Achswerte der Maschine initiiert. Schaltende Messtaster sind in der Regel einfacher aufgebaut und daher kostengünstiger als messende Messtaster. Ähnlich wie messende taktile Messtaster erlauben auch schaltende taktile Messtaster in der Regel eine Auslenkung, nur dass der Wert der Auslenkung bei den schaltenden Messtastern nicht erfasst wird.

Zur Bearbeitung von Werkstücken sind Werkzeugmaschinen bekannt, bei denen ein in die Werkzeugmaschine eingespanntes Werkzeug mittels wenigstens einer von der Werkzeugmaschine umfassten, lagegeregelten Achse relativ zu dem - in der Regel ebenfalls in die Werkzeugmaschine eingespannten - Werkstück bewegt wird. Die Steuerung der lagegeregelten Achse erfolgt mittels einer mit der Werkzeugmaschine verbundenen Steuereinrichtung, üblicherweise einer numerischen Steuerung. Auch Roboter können als Werkzeugmaschine ausgebildet sein. Weiterhin ist es bekannt, die Vermessung von Werkstücken direkt mittels einer Werkzeugmaschine durchzuführen, die zuvor zur Bearbeitung des Werkstücks verwendet wurde. Dazu wird ein hierfür geeigneter Messtaster in die Werkzeugaufnahme der Werkzeugmaschine eingespannt. Relevanter Stand der Technik ist EP 4 152 111 A1.

Aufgabe der vorliegenden Erfindung ist es, auf schnelle, einfache und kostengünstige Weise die Maßhaltigkeit von in einer Werkzeugmaschine bearbeiteten bzw. gefertigten Werkstücken zu überprüfen.

Diese Aufgabe wird durch ein Verfahren mit den in Patentanspruch 1 angegebenen Verfahrensschritten gelöst, also ein Verfahren zum Überprüfen einer Kontur eines Werkstücks mittels einer mit einer Steuereinrichtung verbundenen Werkzeugmaschine, wobei ein schaltender Messtaster in die Werkzeugmaschine eingespannt ist, wobei der Messtaster an seinem dem Werkstück zugewandten Ende ein Antastformelement aufweist, wobei das Antastformelement mittels wenigstens einer lagegeregelten Achse der Werkzeugmaschine relativ zu dem Werkstück positionierbar ist, wobei in der Steuereinrichtung Daten bezüglich einer Sollkontur des Werkstücks für wenigstens einen Bereich der Oberfläche des Werkstücks, ein erster Abstandswert, der einen Abstand zwischen dem Antastformelement und der Sollkontur kennzeichnet, sowie ein erster Auslenkwert, der eine Auslenkung des Messtasters beim Antasten der Oberfläche des Werkstücks kennzeichnet, hinterlegt sind, wobei die Steuereinrichtung aus den Daten bezüglich der Sollkontur, dem Abstandswert und dem Auslenkwert wenigstens einen ersten Abstandspfad sowie wenigstens einen ersten Auslenkpfad ermittelt, die dem Antastformelement des Messtasters als Verfahrweg vorgebbar sind, wobei das Antastformelement des Messtasters, entlang des ersten Abstandspfades verfahren wird, wobei dem Antastformelement des Messtasters der erste Auslenkpfad als Verfahrweg vorgegeben und der Messtaster verfahren wird, wobei die Steuereinrichtung eine Verletzung der Sollkontur feststellt, wenn das Antastformelement des Messtasters beim Verfahren entlang des ersten Abstandspfades wenigstens in einem Punkt des ersten Abstandspfades das Werkstück berührt und der Messtaster infolgedessen ein Schaltsignal erzeugt und/oder beim Verfahren des Messtasters mit vorgegebenem ersten Auslenkpfad das Antastformelement des Messtasters wenigstens in einem Punkt des ersten Abstandspfades das Werkstück nicht berührt und der Messtaster infolgedessen kein Schaltsignal erzeugt.

Ferner wird die Aufgabe gelöst durch ein Werkzeugmaschinensystem zur Überprüfung der Kontur eines Werkstücks mit den Merkmalen gemäß Patentanspruch 17.

Darüber hinaus wird die Aufgabe gemäß Anspruch 18 gelöst durch einen digitalen Zwilling eines Werkzeugmaschinensystems nach Anspruch 17 zur Simulation eines Verfahrens nach einem der Ansprüche 1 bis 16.

Die Erfindung bietet den Vorteil, dass eine zur Bearbeitung des Werkstücks verwendete Werkzeugmaschine, die wenigstens eine lagegeregelte Achse umfasst, nach der Bearbeitung auch zur Vermessung des Werkstücks verwendet wird. Anstatt eines Werkzeugs wird dann ein taktiler schaltender Messtaster in die Werkzeugaufnahme der Werkzeugmaschine eingesetzt und damit eine bestimmte, zu prüfende Kontur entlang der Werkstückoberfläche abgefahren.

Die Erfindung sieht die Verwendung eines schaltenden Messtasters vor, der ein Schaltsignal bei Kontakt (Berührung) mit dem Messobjekt (Werkstück) liefert. Das Schaltsignal wird üblicherweise so lange beibehalten, bis der Kontakt zwischen dem Messtaster und dem Werkstück endet. Schaltende Messtaster sind einfacher aufgebaut als messende Messtaster und daher in der Regel kostengünstiger.

Die Erfindung bietet weiterhin den Vorteil, dass durch die Verwendung eines schaltenden Messtasters direkt in der Werkzeugmaschine, mit der auch die Bearbeitung des Werkstücks erfolgt, auf eine eigens zum Vermessen von Werkstücken vorgesehene Messmaschine verzichtet werden kann. Ein Umspannen des Werkstücks ist damit nicht erforderlich. Dies spart Zeit und Kosten.

Außerdem ist zum Erfassen und Auswerten der Messwerte keine zusätzliche, aufwändige Messsoftware erforderlich. Die Erfassung und Auswertung des Schaltsignals kann daher mittels der Steuereinrichtung der Werkzeugmaschine erfolgen.

Ferner bietet die Erfindung den Vorteil, dass mit dem verwendeten Messtaster nicht eine Vielzahl einzelner Punkte angefahren, sondern jeweils eine komplette Kontur an der Werkstückoberfläche abgefahren wird. Dies verkürzt die zur Vermessung benötigte Zeitdauer.

Die Erfindung sieht vor, dass zum Überprüfen der Maßhaltigkeit eines Werkstücks eine bestimmte Kontur (Sollkontur) der Werkstückoberfläche wenigstens zweimal mit dem Messtaster abgefahren wird. Daten bezüglich der Sollkontur lassen sich aus dem fertig bearbeiteten Werkstück oder einem CAD-File ableiten und liegen somit in der Steuereinrichtung vor.

Zunächst wird in der Steuereinrichtung ein bestimmter Abstandswert festgelegt. Danach wird mittels der Steuereinrichtung automatisch ein Abstandspfad ermittelt, der in dem durch den Abstandswert festgelegten Abstand parallel zu der Sollkontur verläuft. Anschließend wird der Messtaster, insbesondere ein Antastformelement des Messtasters, zum Messen (zur Aufnahme von Messpunkten) entlang des vorgegebenen Abstandspfades relativ zu dem Werkstück bewegt. Dabei gibt der Abstandswert den Abstand zwischen der Sollkontur und dem Abstandspfad an, insbesondere hinsichtlich einer vorgebbaren Richtung, insbesondere hinsichtlich der Oberflächennormalen entlang der Sollkontur. Im Idealfall würde sich so das Antastformelement gegenüber der Sollkontur stets um den Abstandswert versetzt (beabstandet) entlang des vorgegeben Abstandspfades bewegen. Der Abstandswert legt damit insbesondere eine Toleranz fest, die eine zulässige Abweichung (Aufmaß) einer Istkontur von der Sollkontur vorgibt.

Liegen die bei dem Werkstück vorhandenen Konturfehler innerhalb dieser Toleranz, so wird der Messtaster beim Abfahren der Kontur entlang des vorgegebenen Abstandpfades die Werkstückoberfläche nicht berühren und der Messtaster daher nicht schalten, also kein Schaltsignal liefern.

Schaltet jedoch der Messtaster, dann verletzt die Istkontur die zulässige Toleranz und es besteht Aufmaß.

Weiterhin ist in der Steuereinrichtung ein Auslenkwert hinterlegt. Anhand des Auslenkwertes ermittelt die Steuereinrichtung automatisch einen Auslenkpfad. Dabei gibt der Auslenkwert den Abstand zwischen der Sollkontur und dem Auslenkpfad an, insbesondere hinsichtlich einer vorgebbaren Richtung, insbesondere hinsichtlich der Oberflächennormalen entlang der Sollkontur. Im Unterschied zu dem Abstandspfad verläuft der Auslenkpfad jedoch im Werkstück, also unterhalb der Werkstückoberfläche. Wird nun dem Antastformelement des Messtasters der Auslenkpfad als Verfahrweg vorgegeben, so würde sich im Idealfall das Antastformelement entlang der Sollkontur bewegen, und zwar stets mit dem um den Auslenkwert ausgelenkten Messtaster. Der Auslenkwert legt damit insbesondere eine Toleranz fest, die eine zulässige Abweichung (Untermaß) einer Istkontur von der Sollkontur vorgibt.

Im Idealfall würde also der vorgegebene Auslenkwert und damit die vorgegebene Auslenkung des Messtasters während der gesamten Bewegung entlang des Auslenkpfades unverändert bleiben. Geht das Schaltsignal jedoch während der Bewegung entlang des Auslenkpfades verloren, d.h. die Auslenkung wird zu Null, so übersteigt die Abweichung der Istkontur von der Sollkontur den vorgegebenen Auslenkwert und es besteht Untermaß.

Die Maßhaltigkeit des Werkstücks innerhalb der vorgegebenen Toleranz ist für die untersuchte Kontur nur dann gegeben, wenn sowohl bei der ersten Messfahrt kein Schaltsignal registriert wird als auch bei der zweiten Messfahrt ein zu Beginn der Messfahrt vorhandenes Schaltsignal bei der Bewegung entlang des vorgegebenen Pfades nicht verlorengeht.

Die Erfindung sieht die Überprüfung wenigstens einer Kontur des Werkstücks, das heißt einer eine Oberfläche des Werkstücks beschreibenden Kurve vor. Selbstverständlich ist es möglich, dass ein Werkstück erst dann als "gut" klassifiziert wird, wenn die Oberfläche an mehreren Stellen gemäß dem beschriebenen Verfahren geprüft wird und überall (bei allen überprüften Konturen) die Toleranzwerte eingehalten werden.

Für den Fall, dass die Steuereinrichtung bei der Durchführung des erfindungsgemäßen Verfahrens eine Verletzung der Sollkontur feststellt, bestehen mehrere Möglichkeiten, wie die Steuereinrichtung damit umgeht. So kann die Steuereinrichtung etwa eine entsprechende Nachricht an einer Benutzeroberfläche der Steuereinrichtung ausgeben. Ferner kann die Steuereinrichtung diesbezügliche Daten in einem Speicher der Steuereinrichtung hinterlegen oder an eine externe Recheneinrichtung übermitteln. Weiterhin kann die Steuereinrichtung den Daten auch die Position auf der Werkstückoberfläche zuordnen, bei denen das Aufmaß bzw. Untermaß festgestellt wurde.

Eine Ausführungsform der Erfindung sieht vor, dass als erster Abstandswert und als erster Auslenkwert derselbe Wert eingestellt wird. Das bedeutet, der Abstandswert und der Auslenkwert weisen denselben Wert bzw. Betrag (z.B. in µm) auf. Es muss daher nur ein (Toleranz-) Wert vorgegeben werden. Sowohl für ein Aufmaß als auch für ein Untermaß wird demnach dieselbe Toleranz zugelassen.

Eine andere Ausführungsform der Erfindung sieht für den ersten Abstandswert und für den ersten Auslenkwert unterschiedliche Werte vor, so dass die Sollkontur zuerst wenigstens einmal entlang des vorgegebenen Abstandspfades in dem durch den ersten Abstandswert vorgegebenen Abstand mit dem Antastformelement abgefahren wird und anschließend die Sollkontur wenigstens einmal entlang des vorgegebenen Auslenkpfades in dem durch den ersten Auslenkwert vorgegebenen Abstand mit dem zur Sollkontur hin ausgelenkten Messtaster mit dem Antastformelement abgefahren wird. Somit können für das Aufmaß und das Untermaß unterschiedliche Toleranzen vorgegeben werden.

Die Erfindung ist insbesondere dann von Vorteil, wenn dem Überprüfen der Kontur eine Bearbeitung des Werkstücks mittels der Werkzeugmaschine vorausgegangen ist, das heißt, dieselbe Werkzeugmaschine wir sowohl zur Bearbeitung des Werkstücks als auch zum anschließenden Überprüfen seiner Maßhaltigkeit verwendet. Häufig kann dabei das Werkstück zur Vermessung in der zuletzt vorliegenden Position in der Werkzeugmaschine eingespannt bleiben. Dies erspart eine zusätzliche Messmaschine und auch die für eine zweite bzw. geänderte Einspannung benötigte Zeit.

Neben dem Abstandswert an sich gibt es auch bzgl. der Richtung des Abstandes unterschiedliche Möglichkeiten. So sieht eine Ausführungsform der Erfindung vor, dass der erste Abstandswert und/oder der erste Auslenkwert bezüglich einer vorgebbaren Richtung, insbesondere einer Achsrichtung der Werkzeugmaschine bzw. einer Achsrichtung eines Maschinenkoordinatensystems eingestellt werden. Beispielsweise kann so ein Abstand in Z-Richtung vorgegeben werden. Dies ist insbesondere bei Werkstücken mit wenigstens im Wesentlichen planer, parallel zu der X-Y-Ebene verlaufender Oberfläche vorteilhaft. Prinzipiell kann eine Oberflächennormale einer betreffenden Oberfläche jedoch beliebig im Raum bzw. beliebig in einem Maschinenkoordinatensystem ausgerichtet sein. Vorteilhaft ist während der Messung der Messtaster in derselben Richtung orientiert, bezüglich derer auch der Abstandswert bzw. der Auslenkwert vorgegeben wurde.

Eine andere Ausführungsform der Erfindung sieht vor, dass der erste Abstandswert und/oder der erste Auslenkwert bezüglich einer jeweiligen Oberflächennormalen der Sollkontur des Werkstücks entlang der vorgegebenen Pfade (Abstandspfad, Auslenkpfad) eingestellt wird bzw. werden. Dies ist insbesondere bei Werkstücken mit einem gekrümmten Oberflächenverlauf vorteilhaft. Das Antastelement ist dadurch idealerweise immer gleich weit von der Oberfläche des Werkstücks beabstandet bzw. der Messtaster stets gleich weit ausgelenkt, auch bei einer ungleichmäßig, beliebig im Raum ausgerichteten Werkstückoberfläche.

Vorteilhaft kann auch die Orientierung des Messtasters bei der Bewegung entlang des vorgegebenen Pfades an die Oberfläche des Werkstücks, insbesondere die Oberflächennormale des Werkstücks in dem jeweiligen Messpunkt, angepasst werden. Der Messtaster ist somit vorzugsweise stets senkrecht zu der Oberfläche in dem jeweiligen Messpunkt ausgerichtet. Dies erhöht die Qualität der jeweiligen Messung.

Um den Messvorgang weiter zu verkürzen, wird vorteilhaft der Abstandspfad entlang einer positiven Pfadrichtung und anschließend der Auslenkpfad entlang einer negativen Pfadrichtung abgefahren. Das bedeutet, der Messtaster wird zum Überprüfen hinsichtlich eines Aufmaßes und im Anschluss daran zum Überprüfen hinsichtlich eines Untermaßes nacheinander in unterschiedlichen Bewegungsrichtungen entlang der Sollkontur geführt. Die Zeitabschnitte, in denen keine Messung stattfinden, sind damit auf ein Minimum reduziert.

Eine Ausführungsform der Erfindung sieht vor, dass die Sollkontur mehrmals entlang mehrerer vorgegebener Abstandspfade mit unterschiedlichen, durch unterschiedliche Abstandswerte vorgegebenen Abständen zwischen Werkstückoberfläche und Antastformelement mit dem Messtaster abgefahren wird.

Analog kann die Sollkontur vorteilhaft mehrmals entlang mehrerer vorgegebener Auslenkpfade mit unterschiedlichen, durch unterschiedliche Auslenkwerte vorgegebenen Auslenkungen mit dem zur Sollkontur hin ausgelenkten Messtaster abgefahren werden.

Dabei sieht eine Ausführungsform der Erfindung vor, für den Fall, dass beim Verfahren des Antastformelements entlang des ersten Abstandspfades mit dem durch den ersten Abstandswert vorgegebenen Abstand in einem Punkt des ersten Abstandspfades eine Berührung des Antastformelements mit dem Werkstück registriert wird, der Abstand zwischen dem Antastformelement und der Sollkontur auf einen vorgegebenen zweiten Abstandswert vergrößert wird und das Antastformelement entlang eines zweiten Abstandspfades mit dem durch den zweiten Abstandswert vorgegebenen Abstand zur Sollkontur verfahren wird.

Vorteilhaft wird der Abstand zwischen dem Antastformelement und der Sollkontur bei jeder weiteren Berührung des Antastformelements mit dem Werkstück auf einen weiteren vorgegebenen Abstandswert vergrößert und das Antastformelement entlang eines weiteren Abstandspfades mit dem durch den weiteren Abstandswert vorgegebenen Abstand zur Sollkontur verfahren, solange, bis das Ende der abzufahrenden Sollkontur erreicht ist.

Weiterhin wird vorteilhaft der zweite bzw. der zuletzt geltende Abstandswert als Aufmaß des Werkstücks in der Steuereinrichtung gespeichert.

Eine weitere Ausführungsform der Erfindung sieht vor, für den Fall, dass der Messtaster beim Abfahren der Sollkontur mit der durch den ersten Auslenkwert vorgegebenen Auslenkung in einem ersten Punkt der Sollkontur sein Schaltsignal verliert, die Auslenkung des Messtasters in Bezug auf die Sollkontur auf einen vorgegebenen zweiten Auslenkwert vergrößert wird und die Sollkontur weiter mit der durch den zweiten Auslenkwert vorgegebenen Auslenkung des Messtasters abgefahren wird.

Vorteilhaft wird die Auslenkung des Messtasters in Bezug auf die Sollkontur bei jedem weiteren Verlust des Schaltsignals auf einen weiteren vorgegebenen Auslenkwert vergrößert und die Sollkontur weiter mit der durch den jeweils weiteren Auslenkwert vorgegebenen Auslenkung abgefahren, solange, bis das Ende der abzufahrenden Sollkontur erreicht ist.

Weiterhin wird vorteilhaft der zweite bzw. der zuletzt geltende Auslenkwert als Untermaß des Werkstücks in der Steuereinrichtung gespeichert.

Die maximal möglich Auslenkung des Messtasters (i.d.R. im mm-Bereich) und die mit dem Messtaster erfassten Abweichungen zwischen dem Sollmaß und dem Istmaß des Werkstücks (i.d.R. im µm-Bereich) unterscheiden sich in der Regel um Größenordnungen, so dass eine Beschädigung des Messtasters beim Vermessen der Istkontur gewöhnlich ausgeschlossen werden kann.

Um dennoch bei der zuletzt genannten Ausführungsform eine Beschädigung des Messtasters bei einem steilen Anstieg der Kontur zu vermeiden sind verschiedene Maßnahmen möglich.

So kann ein taktiler schaltender Messtaster vorgesehen werden, der nicht nur bei einer Berührung ein Schaltsignal liefert, sondern der ein weiteres Schaltsignal erzeugt, wenn die maximale Auslenkung des Messtasters erreicht ist. Erkennt die Steuerung das weitere Schaltsignal, so wird der Messtaster um einen bestimmten Betrag zurückgezogen, z.B. so weit, bis auch das erste Schaltsignal verlorengeht.

Eine andere Maßnahme besteht darin, dass wenn das Schaltsignal verlorengeht nicht sofort der nächstgrößere Auslenkwert eingestellt wird, sondern die Position, bei der der Messtaster das Schaltsignal verliert, gespeichert wird und der vollständig ausgelenkte Messtaster zunächst weiter entlang des vorgegebenen Auslenkpfades verfahren wird, entweder bis das Ende des vorgegebenen Auslenkpfades erreicht ist oder der Messtaster in einer zweiten Position erneut schaltet. Anschließend wird der Messtaster zu der gespeicherten Position zurückgefahren und erst danach der nächstgrößere Auslenkwert eingestellt. Beim Erreichen der zweiten Position wird der Messtaster um einen bestimmten Betrag zurückgezogen und erst dann weiter entlang des vorgegebenen Pfades verfahren, ggf. bis erneut ein Schaltsignal registriert wird. Insgesamt wird der Messtaster so auch über ein Profil mit verhältnismäßig großen Höhen (Erhebungen) und Tiefen (Vertiefungen) ohne Beschädigung verfahren.

Eine Ausführungsform der Erfindung sieht vor, zunächst mit relativ großen Abstandswerten bzw. Auslenkwerten zu beginnen und nach jeder Messfahrt diese sukzessive zu verkleinern, solange bis der Messtaster schaltet bzw. das Schaltsignal verliert. So lässt sich das genaue Ausmaß der Abweichung der Istkontur von der Sollkontur gut eingrenzen.

Umgekehrt kann auch zunächst mit sehr kleinen Abstandswerten bzw. Auslenkwerten begonnen werden und anschließend werden die Abstandswerte bzw. Auslenkwerte nach einer detektierten Konturverletzung sukzessive Schritt für Schritt so lange erhöht, bis keine Konturverletzung mehr festgestellt wird. Auch diese Variante dient dazu, das Ausmaß der Konturabweichung genauer einzugrenzen, wobei abhängig von den jeweiligen Gegebenheiten einmal diese Variante und einmal die zuvor genannte Variante schneller zielführend sein kann.

Vorteilhaft können die Werte der ersten und/oder zweiten Abstandswerte bzw. deren Inkremente bzw. Dekremente für aufeinanderfolgende Fahrten in der Steuereinrichtung hinterlegt werden. Dabei kann zwischen benachbarten Werten jeweils dieselbe Differenz vorgegeben werden, es sind jedoch auch andere Staffelungen denkbar. Insbesondere können die Differenzen umso kleiner werden, je näher der Messtaster an die Sollkontur herangeführt wird. So kann zunächst schnell festgestellt werden, ob grobe Abweichungen zwischen der Soll- und der Istkontur vorliegen und anschließend können die vorhandenen Toleranzen sehr fein bestimmt werden.

Vorteilhaft bestimmt die Steuereinrichtung anhand der jeweiligen Abstands- bzw. Auslenkwerte automatisch die darauf beruhenden Abstands- bzw. Auslenkpfade.

Die Ausführung des erfindungsgemäßen Verfahrens erfolgt mittels eines Werkzeugmaschinensystems zum Überprüfen einer Kontur eines Werkstücks, umfassend eine Werkzeugmaschine zur Bearbeitung des Werkstücks, eine mit der Maschine verbundene Steuereinrichtung sowie einem in eine Werkzeugaufnahme der Maschine eingespannten, schaltenden Messtaster mit einem Antastformelement,
- wobei ein schaltender Messtaster in die Werkzeugmaschine eingespannt ist,
- wobei der Messtaster an seinem dem Werkstück zugewandten Ende ein Antastformelement aufweist,
- wobei das Antastformelement mittels wenigstens einer lagegeregelten Achse der Werkzeugmaschine relativ zu dem Werkstück positionierbar ist,
- wobei in der Steuereinrichtung Daten bezüglich einer Sollkontur des Werkstücks für wenigstens einen Bereich der Oberfläche des Werkstücks, ein erster Abstandswert, der einen Abstand zwischen dem Antastformelement und der Sollkontur kennzeichnet, sowie ein erster Auslenkwert, der eine Auslenkung des Messtasters beim Antasten der Oberfläche des Werkstücks kennzeichnet, hinterlegt sind,
- wobei die Steuereinrichtung aus den Daten bezüglich der Sollkontur, dem Abstandswert und dem Auslenkwert wenigstens einen ersten Abstandspfad sowie wenigstens einen ersten Auslenkpfad ermittelt, die dem Antastformelement des Messtasters als Verfahrweg vorgebbar sind,
- wobei die Steuereinrichtung das Antastformelement des Messtasters, entlang des ersten Abstandspfades verfährt,
- wobei die Steuereinrichtung dem Antastformelement (22) des Messtasters den ersten Auslenkpfad als Verfahrweg vorgibt und den Messtaster verfährt,
- wobei die Steuereinrichtung eine Verletzung der Sollkontur feststellt, wenn das Antastformelement des Messtasters beim Verfahren entlang des ersten Abstandspfades wenigstens in einem Punkt des ersten Abstandspfades das Werkstück berührt und der Messtaster infolgedessen ein Schaltsignal erzeugt
- und/oder beim Verfahren des Messtasters mit vorgegebenem ersten Auslenkpfad das Antastformelement des Messtasters (21) wenigstens in einem Punkt des ersten Abstandspfades das Werkstück nicht berührt und der Messtaster infolgedessen kein Schaltsignal erzeugt.

Besonders vorteilhaft kann ein erfindungsgemäßes Verfahren zunächst in einer Simulationsumgebung simuliert werden. Hierfür dient ein digitaler Zwilling eines Werkzeugmaschinensystems nach Anspruch 17 zur Simulation eines Verfahrens nach einem der Ansprüche 1 bis 16. Die Simulationsumgebung umfasst einen Rechner, der mit Mitteln zur Erzeugung einer virtuellen Realität ausgestattet ist.

Die Erfindung wird nachfolgend anhand von Ausführungsbeispielen exemplarisch näher beschrieben und erläutert. Dabei zeigen:
- FIG 1: Ein Werkzeugmaschinensystem zur Durchführung eines erfindungsgemäßen Verfahrens,
- FIG 2: die Feststellung einer Konturabweichung in Form eines Aufmaßes,
- FIG 3: die Feststellung einer Konturabweichung in Form eines Untermaßes,
- FIG 4: die Bestimmung eines Aufmaßes,
- FIG 5: die Bestimmung eines Untermaßes,
- FIG 6: die Bestimmung eines Aufmaßes,
- FIG 7: die Bestimmung eines Untermaßes,
- FIG 8: Verfahrensschritte bei der Durchführung eines erfindungsgemäßen Verfahrens.

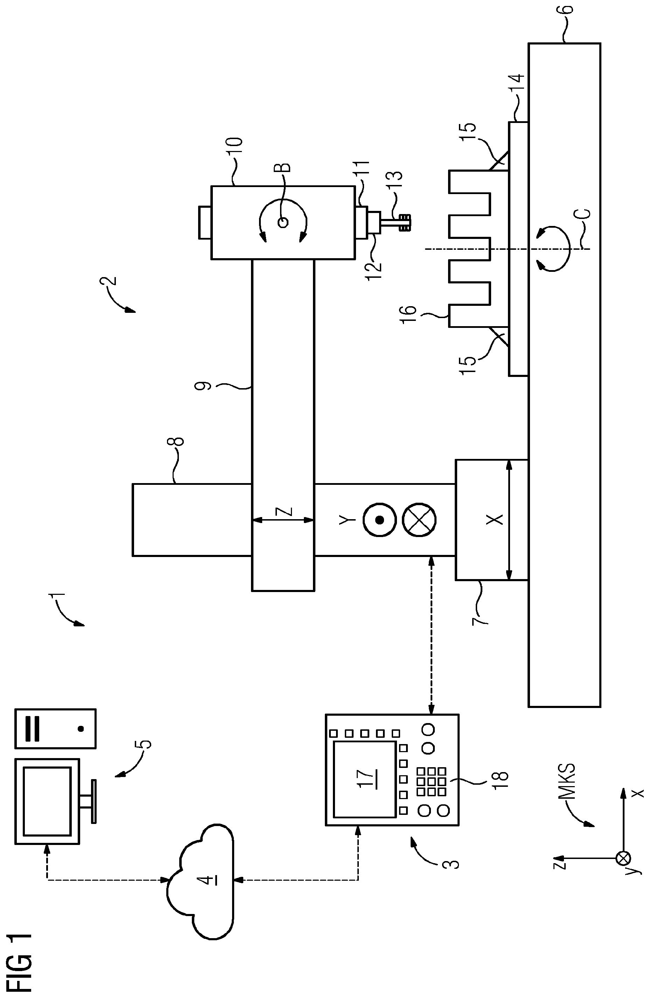

In FIG 1 ist schematisiert ein Maschinensystem in Form eines Werkzeugmaschinensystems 1 dargestellt. Das Werkzeugmaschinensystem 1 umfasst eine Maschine in Form einer Werkzeugmaschine **2.** Ferner umfasst das Werkzeugmaschinensystem 1 eine mit der Werkzeugmaschine 2 verbundene numerische Steuereinrichtung in Form einer CNC-Steuerung 3 zur Steuerung der Werkzeugmaschine **2.** Darüber hinaus umfasst das Werkzeugmaschinensystem 1 eine über ein Netzwerk 4, zum Beispiel das Internet, verbundene externe Recheneinrichtung in Form eines CAD/CAM-Systems 5.

Die dargestellte Werkzeugmaschine 2 verfügt über 3 lagegeregelte Linearachsen X, Y und Z, wobei ein erstes Tragelement 7 in x-Richtung, ein zweites Tragelement 8 in y-Richtung und ein drittes Tragelement 9 in z-Richtung bezüglich eines bezüglich der Werkzeugmaschine 2 ortsfesten Maschinenkoordinatensystems MKS verstellbar ist.

Das erste Tragelement 7 ist über einen in x-Richtung verstellbaren Linearantrieb (nicht dargestellt) mit einem ruhenden Maschinengestell 6 verbunden, das zweite Tragelement 8 ist über einen in y-Richtung verstellbaren Linearantrieb (nicht dargestellt) mit dem ersten Tragelement 7 verbunden und das dritte Tragelement 9 ist über einen in z-Richtung verstellbaren Linearantrieb (nicht dargestellt) mit dem zweiten Tragelement 8 verbunden.

Das dritte Tragelement 9 trägt einen Spindelantrieb 10, der seinerseits um eine zur Y-Achse parallele, lagegeregelte Rundachse B schwenkbar ist. Der Spindelantrieb 10 weist seinerseits eine um eine Spindelachse (nicht dargestellt) rotierbare, drehzahl- und/oder lagegeregelte Werkzeugspindel 11 auf, in die ein Werkzeughalter 12 mit dem daran befestigten Werkzeug 13 eingespannt ist.

Weiterhin umfasst die Werkzeugmaschine 2 eine um eine parallel zur Z-Achse ausgerichtete, lagegeregelte Werkzeugtischachse C, um die ein Werkstücktisch 14 rotierbar ist.

Der Werkzeugtisch 14 ist ebenfalls mit dem ruhenden Maschinengestell 6 verbunden und an dem Werkzeugtisch 14 ist mittels der Werkzeughalter 15 ein Werkstück 16 befestigt.

Die Werkzeugmaschine 2 verfügt im Rahmen des Ausführungsbeispiels demnach über fünf lagegeregelte Maschinenachsen, durch die eine Relativbewegung zwischen dem Werkzeug 13, das im Rahmen des Ausführungsbeispiels in Form eines Fräsers vorliegt, und dem Werkstück 16 durchgeführt werden kann. Es handelt sich somit um eine sogenannte 5-achsige Werkzeugmaschine (5-Achs-Maschine), wobei an dieser Stelle angemerkt sei, dass eine Werkzeugmaschine selbstverständlich auch noch mehr, aber auch weniger als fünf Maschinenachsen aufweisen kann. Die Antriebe der lagegeregelten Maschinenachsen wurden wegen der besseren Übersichtlichkeit im Ausführungsbeispiel nicht dargestellt.

Die Werkzeugmaschine 2 ist mit der CNC-Steuerung 3 verbunden, die anhand eines Teileprogramms und/oder einer Handbedieneingabe Bewegungssollwerte für die Maschinenachsen zur Steuerung einer zwischen dem Werkzeug 13 und dem Werkstück 16 stattfindenden Relativbewegung ermittelt. Die CNC-Steuerung 3 ermittelt die Bewegungssollwerte insbesondere anhand des Teileprogramms, in dem die von dem Werkzeug 13 relativ zu dem Werkstück 16 durchzuführenden Bewegungen in Form von Befehlen bzw. Programmanweisungen, in der Regel in Form von G-Code, definiert sind.

Alternativ oder zusätzlich kann die Bewegung des Werkzeugs 13 und/oder das Werkstücks 16 auch mittels einer Handbedieneingabe über eine Bedieneinrichtung mit Bedienelementen 18 in Verbindung mit einer Anzeigevorrichtung in Form eines Displays 17 der CNC-Steuerung 3 von einem Bediener vor Ort an der Werkzeugmaschine 2 vorgegeben werden. Die Bedienelemente 18 umfassen insbesondere Taster, oder Drehregler. Vorteilhaft kann das Display 17 auch als Touchscreen und damit ebenfalls als Bedienelement ausgeführt sein.

Das Teileprogramm wird üblicherweise in einer aus Sicht der CNC-Steuerung externen Recheneinrichtung, im Ausführungsbeispiel dem CAD/CAM-System 5 und einem eventuell dem CAD/CAM-System nachgeschalteten sogenannten Postprozessor (nicht dargestellt) außerhalb der CNC-Steuerung 3 erzeugt und von dort, insbesondere über das Netzwerk 4, auf die CNC-Steuerung 3 übertragen.

Bei der Abarbeitung des Teileprogramms erzeugt die CNC-Steuerung 3 in einem bestimmten Takt, dem Interpolationstakt, Lagesollwerte x, y und z für die Linearachsen sowie Winkellagesollwerte β und y (nicht dargestellt) für die Rundachsen B und C. Durch diese Bewegungssollwerte wird das Werkzeug 13 mit vorgegebener Orientierung relativ zu dem Werkstück 16 entlang einer Bewegungsbahn (Bahn) bewegt.

Neben den reinen Lagesollwerten sind mittels der numerischen Steuereinrichtung auch die Dynamik der Relativbewegung bzw. der einzelnen Achsen betreffende Größen, insbesondere die Geschwindigkeit, die Beschleunigung oder der Ruck, ermittelbar bzw. einstellbar.

Wie oben bereits beschrieben wurde, wird das Teileprogramm zur Bearbeitung des Werkstücks in der Regel aus einem CAD-File abgeleitet. Durch das CAD-File ist das Werkstück exakt beschrieben, insbesondere hinsichtlich seiner Abmessungen und Merkmale (Features).

Zur Überprüfung der Qualität eines Werkstücks ist es üblich, die Abmessungen und Merkmale des Werkstücks nach der Bearbeitung zu überprüfen, insbesondere anhand von Messungen.

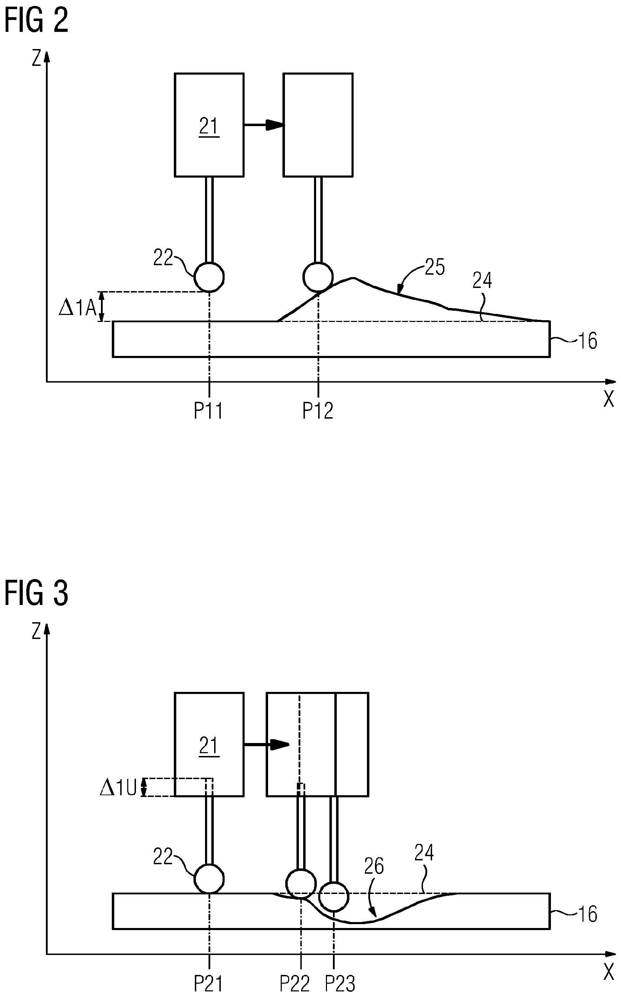

So sieht die Erfindung vor, dass nach einer Bearbeitung des Werkstücks 16, insbesondere nach dessen Fertigstellung, anstatt eines Werkzeugs ein Messtaster 21 (vgl. FIG 2 bis 7) in die Werkzeugspindel 11 bzw. den Werkzeughalter 12, ggf. unter Zwischenspannung eines Werkzeugadapters (nicht dargestellt), der Werkzeugmaschine 2 eingespannt wird. Erfindungsgemäß ist hierfür ein schaltender, taktiler Messtaster 21 vorgesehen, der bei einer Berührung des Messtasters 21, insbesondere eines Antastformelements 22 am Ende des Messtasters 21, ein Schaltsignal erzeugt. Das Schaltsignal bleibt dabei solange vorhanden, bis der Kontakt (die Berührung) zwischen dem Messtaster 21 und dem Werkstück 16 wieder gelöst wird.

Figur 2 beschreibt nun den Fall, dass der schaltende Messtaster 21, an dessen Ende sich ein Antastformelement in Form einer Messkugel 22 befindet, entlang eines Abstandspfades (einer Bahn), im Ausführungsbeispiel von links nach rechts, entlang (parallel zu) der Sollkontur 24 des Werkstücks 16 bewegt wird. In der CNC-Steuerung 3 ist hierbei ein Abstandswert Delta 1A (in der Figur als Δ1A bezeichnet) hinterlegt, der für diese Bewegung einen gewünschten Abstand zwischen der Oberfläche des Werkstücks 16 und der Messkugel 22 vorgibt. Im Ausführungsbeispiel bezeichnet der Abstandswert Delta 1A einen Abstand in Z-Richtung bezüglich eines Maschinenkoordinatensystems MKS. Analog könnte der Abstandswert bezüglich einer anderen, beliebig im Raum orientierbaren Richtung, insbesondere einer Oberflächennormalen des Werkstücks 16 in dem jeweiligen Messpunkt, orientiert sein.

Aus dem in der CNC-Steuerung 3 hinterlegten Abstandswert Delta 1A und der zu vermessenden Sollkontur 24 ermittelt die CNC-Steuerung 3 einen Abstandspfad, der im Abstand Delta 1A parallel zu der Sollkontur 24 verläuft. Der Abstandspfad wird der Messkugel 22 als Pfad bzw. Bahn vorgegeben und die Messkugel 22 entlang dieser Bahn verfahren.

Im Ausführungsbeispiel sollte die Oberfläche des Werkstück 16 in dem skizzierten Bereich gemäß ihrer Sollkontur 24 idealerweise Plan sein. Wie ebenfalls aus der Zeichnung ersichtlich ist, weist die Oberfläche des Werkstücks 16 in dem dargestellten Bereich jedoch eine Erhebung 25 mit einer Abweichung Delta 1A (Aufmaß) gegenüber einem Sollmaß auf. Die Istkontur weicht damit in dem dargestellten Bereich erheblich von der Sollkontur 24 ab.

Wird nun im Ausführungsbeispiel gemäß FIG 2 der Messtaster 21 von der Position P11 mit dem Abstand Delta 1A von der Sollkontur 24 in X-Richtung (von links nach rechts) über die Oberfläche des Werkstückstücks 16 geführt, so berührt die Messkugel 22 die Erhebung 25 in der Position P12, wodurch ein Schaltsignal bei dem Messtaster 21 ausgelöst wird. Durch das Schaltsignal erkennt die CNC-Steuerung 3 in der Position P12 ein Aufmaß an der Oberfläche des Werkstücks 16, welches den vorgegebenen Abstandswert Delta 1A übersteigt. Gegebenenfalls wird dadurch erkannt, dass das Werkstück 16 nicht den vorgegebenen Qualitätsanforderungen entspricht.

Analog zum Erkennen einer unerwünschten Erhebung 25 gemäß Figur 2 wird nachfolgend anhand des Beispiels gemäß Figur 3 verdeutlicht, wie eine unerwünschte Vertiefung 26 der Sollkontur 24 an der Oberfläche des Werkstücks 16 erkannt wird. Auch hier wird zunächst ein Abstand zu der Sollkontur 24, im Ausführungsbeispiel der Auslenkwert Delta 1U vorgegeben. Anders als im zuvor gezeigten Ausführungsbeispiel wird hier jedoch der Messtaster 21 zunächst so lange in (negativer) Z-Richtung auf das Werkstück 16 zu bewegt, bis die Messkugel 22 die Oberfläche des Werkstücks 16 berührt und der Messtaster 21 ein Schaltsignal erzeugt. Anschließend wird der Messtaster 21 um den Wert Delta 1U weiter in negativer Z-Richtung verfahren. Dabei taucht die Halterung für die federnd gelagerte Messkugel 22 um den entsprechenden Wert in das Gehäuse des Messtasters 21 ein. Der Messtaster 21 ist damit um den Auslenkwert Delta 1U ausgelenkt. Es sind Messtaster üblich und bekannt, die einen derartigen Federweg (Auslenkwert) von bis zu einigen Millimetern zulassen.

Aus dem in der CNC-Steuerung 3 hinterlegten Auslenkwert Delta 1U und der zu vermessenden Sollkontur 24 ermittelt die CNC-Steuerung 3 einen Auslenkpfad, der im Abstand Delta 1A parallel zu der Sollkontur 24 verläuft, mit dem Unterschied, dass der Auslenkpfad (im Unterschied zu dem Abstandspfad) nun innerhalb des Werkstücks 16 verläuft. Wird der Messkugel 22 der Auslenkpfad als Pfad bzw. Bahn vorgegeben, so bewegt sich die ausgelenkte Messkugel 22 nun entlang der Oberfläche (Istkontur) des Werkstücks 16.

Wird nun analog zu dem Ausführungsbeispiel gemäß Figur 2 der Messtaster 21 wieder in X-Richtung (von links nach rechts) entlang des Auslenkpfades verfahren, so führt dies dazu, dass bei dem Messtaster 21 in der Position P22 im Bereich der Vertiefung 26 zunächst die Auslenkung des Messtasters 21 abnimmt, bis schließlich in der Position P23 die Messkugel 22 des nun nicht mehr ausgelenkten Messtasters 21 den Kontakt zu dem Werkstück 16 verliert. Die Vertiefung 26 übersteigt somit den Wert Delta 1U und der Messtaster 21 verliert sein Schaltsignal.

Auch hier kann die CNC-Steuerung 3 (vgl. FIG 1), nämlich durch den Wegfall des Schaltsignals, eine unerwünschte Abweichung der Istkontur von der Sollkontur 24 feststellen, deren Wert im Ausführungsbeispiel gemäß FIG 3 den Wert Delta 1U übersteigt.

Vorteilhaft wird bei der Vermessung des Werkstücks 16 zunächst die in Figur 2 beschriebene Variante und im Anschluss daran die in Figur 3 beschriebene Variante ausgeführt. Dadurch können eine zu starke Auslenkung und eine gegebenenfalls daraus resultierende Beschädigung des Messtasters 21 verhindert werden.

In den Ausführungsbeispielen gemäß den Figuren FIG 2 und FIG 3 verläuft die Sollkontur 24 des Werkstücks 16 parallel zur X-Achse. Selbstverständlich ist das erfindungsgemäße Verfahren analog auch auf beliebig im Raum ausgerichtete Werkstückoberflächen übertragbar.

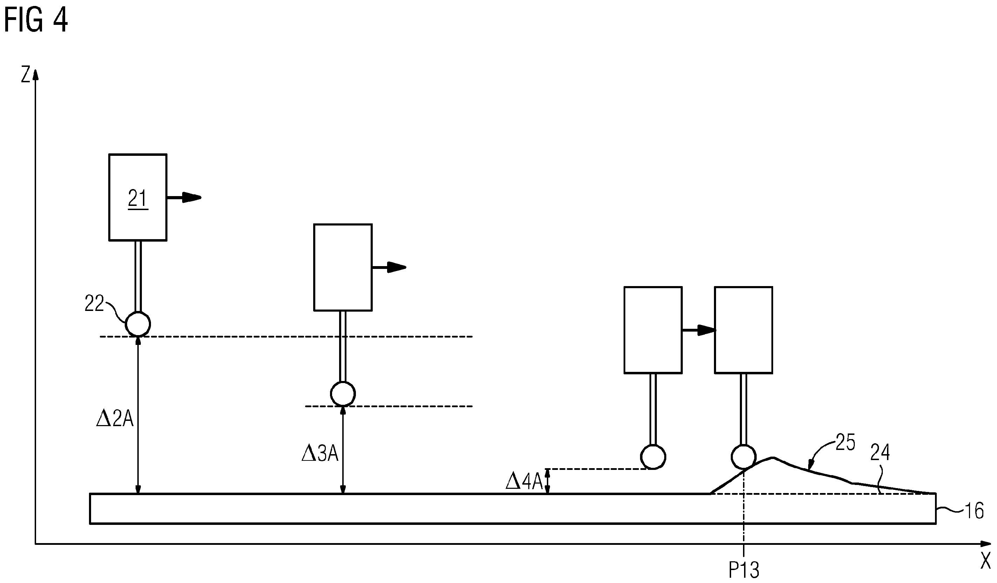

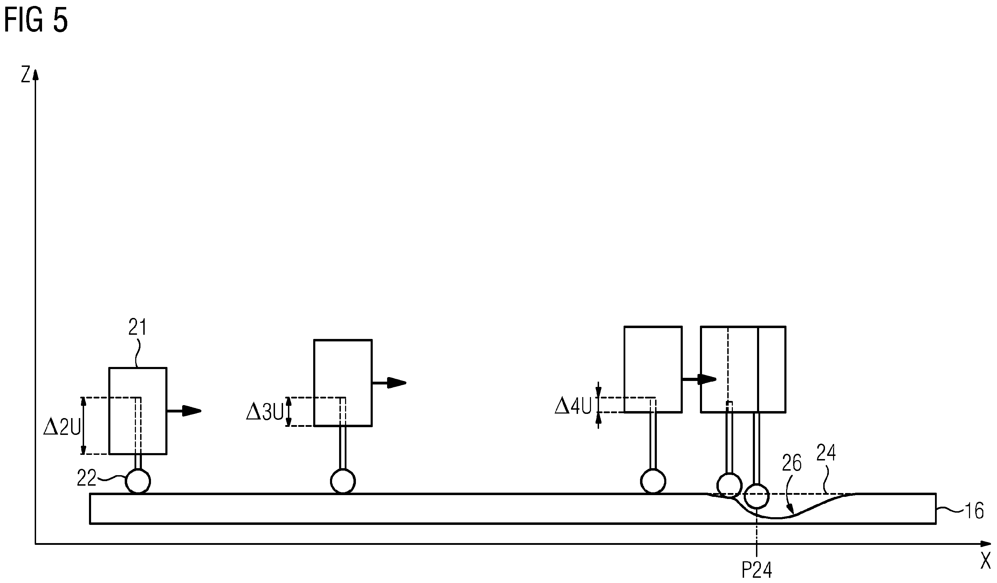

Die Ausführungsbeispiele gemäß den Figuren FIG 4 und FIG 5 veranschaulichen, wie man mittels der Erfindung den Wert eines Konturfehlers eingrenzen und damit verhältnismäßig genau bestimmen kann. Hierfür tastet man sich im Ausführungsbeispiel gemäß FIG 4 Schritt für Schritt an einen Konturfehler in Form einer Erhebung 25 heran, indem man zunächst mit dem Messtaster 21 die Sollkontur 24 in einem zweiten Abstand Delta 2A entlang eines zweiten Abstandpfades abfährt. Kommt es dabei zu einer Berührung zwischen dem Werkstück 16 und der Messkugel 22, so schaltet der Messtaster 21. Kommt es hingegen - wie im Ausführungsbeispiel - zu keiner Berührung, so schaltet der Messtaster 21 nicht und die CNC-Steuerung 3 erkennt, dass entlang des untersuchten zweiten Abstandpfades keine Erhebung vorliegt, die den Wert Delta 2A übersteigt. Im nächsten Schritt wird der Abstand zwischen der Sollkontur 24 und der Messkugel 22 verkleinert, im Beispiel auf den dritten Abstandswert Delta 3A. Mit diesem Abstand wird die Sollkontur 24 erneut entlang eines dritten Abstandpfades abgefahren. Auch hier kommt es im Ausführungsbeispiel wieder zu keiner Berührung. Erst nachdem der Abstand im Ausführungsbeispiel auf den vierten Abstandswert Delta 4A verkleinert wurde und die Messkugel 22 entlang des daraus resultierenden, vierten Abstandpfades verfahren wird, berührt die Messkugel 22 die Oberfläche des Werkstücks 16, nämlich bei der Position P13. Die CNC-Steuerung 3 erkennt damit, dass in diesem Punkt P13 eine Erhebung 25 vorliegt, die den Wert Delta 4A übersteigt.

Die Suche nach unerwünschten Vertiefungen erfolgt analog. Hierfür wird der Messtaster 21 zunächst relativ weit ausgelenkt, im Ausführungsbeispiel um den Wert Delta 2U, und der Messkugel 22 ein daraus resultierender zweiter Auslenkpfad als Verfahrweg vorgegeben. Verliert der Messtaster 21 während der Bewegung sein Schaltsignal nicht, so erkennt die CNC-Steuerung 3 dadurch, dass keine Vertiefung vorliegt, deren Tiefe den Wert Delta 2U übersteigt. Nachfolgenden wird Schritt für Schritt die Auslenkung reduziert, bis der Messtaster 21 schließlich sein Schaltsignal verliert. Im Ausführungsbeispiel ist dies bei der Auslenkung Delta 3U und dem daraus resultierenden dritten Auslenkpfad noch nicht der Fall, aber bei der Auslenkung Delta 4U und der Bewegung, die aus dem resultierenden vierten Auslenkpfad hervorgeht. Hier verliert die Messkugel 22 bei der Position P24 den Kontakt mit der Werkstück-Oberfläche und der Messtaster 21 infolge sein Schaltsignal. Dadurch erkennt die CNC-Steuerung 3, dass bei der Position P24 eine Vertiefung 26 vorliegt, deren Wert den Wert Delta 4U übersteigt.

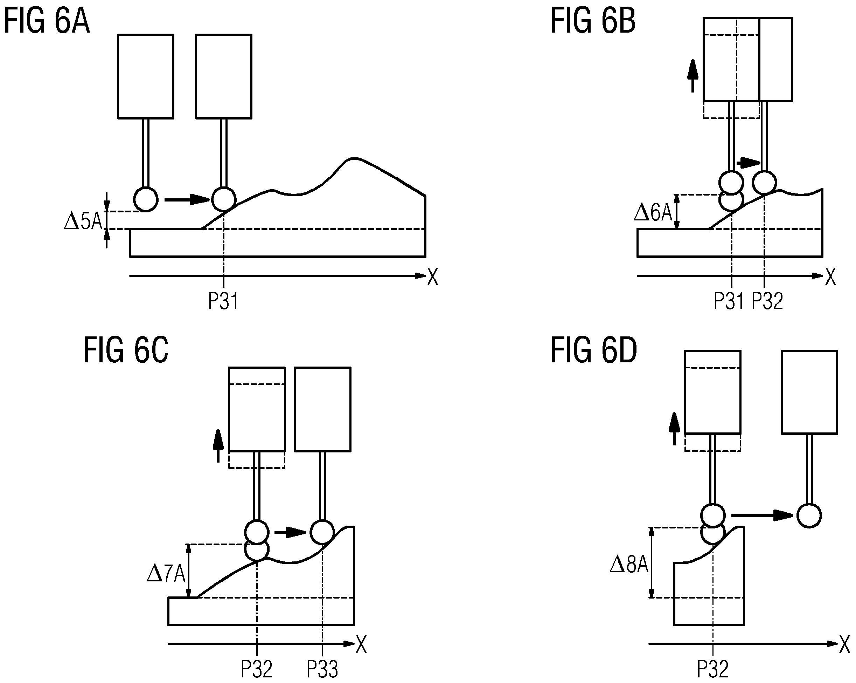

Eine weitere Ausführungsform der Erfindung zeigt Figur **6****.** Analog zu der Ausführungsform gemäß Figur 2 wird auch hier zunächst ein fünfter Abstandswert Delta 5A vorgegeben, aus dem die CNC-Steuerung 3 einen fünften Abstandspfad ermittelt. Wird nun, wie in Figur 6 ersichtlich, bei der Position P31 eine Berührung des Messkopfes 22 mit der Oberfläche des Werkstücks 16 festgestellt, indem bei dem Messtaster 21 ein Schaltsignal ausgelöst wird, so wird bei dem Messtaster 21 automatisch ein neuer, in der CNC-Steuerung 3 hinterlegter sechster Abstandswert Delta 6A eingestellt. Nachfolgend wird der Messtaster 21 mit dem neuen Abstandswert Delta 6A weiter entlang des daraus resultierenden sechsten Abstandspfades entlang (parallel zu) der Sollkontur 24 bewegt. Wird dabei erneut eine Berührung des Messkopfes 22 mit der Oberfläche des Werkstücks 16 registriert, im Ausführungsbeispiel bei der Position P32, so wird der Abstand zwischen der Oberfläche des Werkstücks 16 und dem Messtaster 21 ein weiteres Mal vergrößert, indem automatisch ein gegenüber dem Abstandswert Delta 6A weiter vergrößerter, in der CNC-Steuerung 3 hinterlegter Abstandswert Delta 7A eingestellt und die Messkugel 22 weiter entlang eines daraus resultierenden siebten Abstandspfades verfahren wird. Die zuletzt aufgezeigten Verfahrensschritte werden so lange wiederholt, bis keine weitere Berührung zwischen der Messkugel 22 und der Oberfläche des Werkstücks 16 registriert wird. Im Ausführungsbeispiel ist dies bei dem Abstandswert Delta 7A noch nicht, aber bei dem Abstandswert Delta 8A der Fall. Der zuletzt eingestellte Abstandswert Delta 8A, bei dem der Messtaster 21 nicht mehr schaltet, liefert somit das Maß der Abweichung (Aufmaß) der untersuchten Istkontur von der Sollkontur des Werkstücks 16.

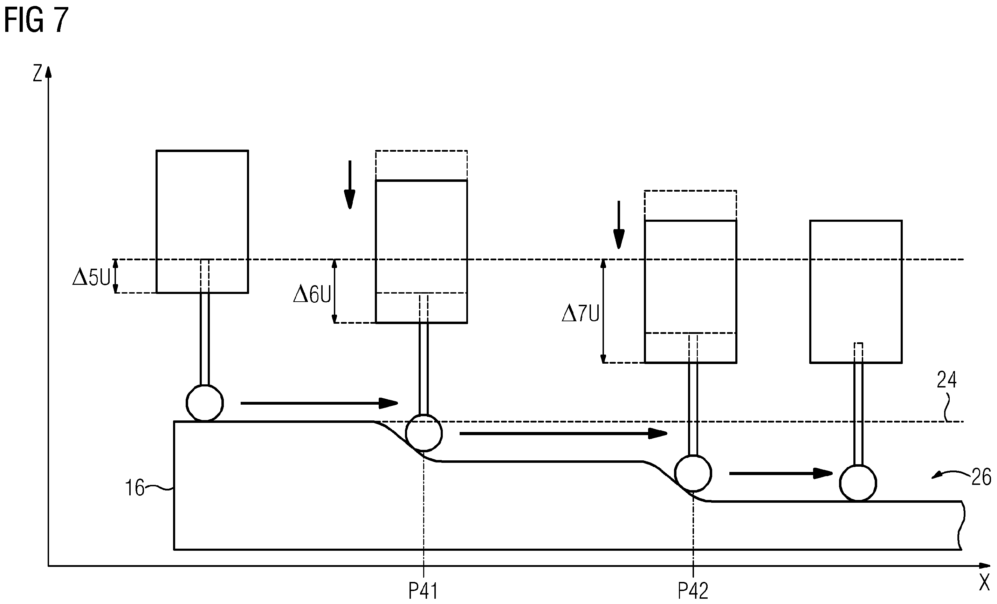

Das im Ausführungsbeispiel gemäß Figur 6 dargestellte Verfahren zur Bestimmung eines Aufmaßes kann analog auch zur Bestimmung eines Untermaßes verwendet werden, wie nachfolgend anhand von Figur 7 erläutert wird.

Wie zuvor im Zusammenhang mit Figur 3 beschrieben, wird auch hier zunächst die Messkugel 22 auf die Oberfläche des Werkstücks 16 zu bewegt und ein Auslenkwert Delta 5U eingestellt, um den der Messtaster 21 nach einer (durch das von dem Messtaster 21 erzeugte Schaltsignal) erkannten Berührung weiter ausgelenkt wird. Der Messkugel 21 wird auch hier zunächst ein fünfter Auslenkpfad vorgegeben, der um den Auslenkwert Delta 5U versetzt "unterhalb" der Sollkontur 24 innerhalb des Werkstücks 16 verläuft. Anschließend wird auch bei diesem Ausführungsbeispiel der um den Auslenkwert Delta 5U ausgelenkte Messtaster 21 wieder von links nach rechts über die Oberfläche des Werkstücks 16 bewegt, so lange, bis im Bereich der Vertiefung 26 das Untermaß den Auslenkwert Delta 5U übersteigt und der Messtaster 21 sein Schaltsignal verliert, im Ausführungsbeispiel bei der Position P41. Anschließend wird der Messtaster 21 automatisch um den in der CNC-Steuerung 3 hinterlegten Auslenkwert Delta 6U gegenüber dem Sollwert in Richtung der Werkstückoberfläche (Z-Richtung) ausgelenkt und CNC-Steuerung bestimmt einen sechsten Auslenkpfad, der der Messkugel 22 als Bahn vorgegeben wird. Der Messtaster 21 wird nun weiter mit dem nun vorgegebenen Pfad von links nach rechts entlang der Sollkontur 24 bewegt, bis der Messtaster 21 bei der Position P42 erneut sein Schaltsignal verliert. Analog zu Figur 6 werden auch hier wieder die zuletzt genannten Verfahrensschritte so lange wiederholt, bis das Messsignal des Messtaster 21 nicht mehr verloren geht. Auch hier liefert der zuletzt eingestellte Auslenkwert (im Ausführungsbeispiel Delta 7U) das Maß der Abweichung (Untermaß) der Istkontur von der Sollkontur des Werkstücks 16.

Vorteilhaft können die Bearbeitung des Werkstücks 16 und die anschließende Vermessung anhand eines digitalen Zwillings des Werkzeugmaschinensystems 1, welches auch einen digitalen Zwilling des Messtasters 21 umfasst, in einer geeigneten Simulationsumgebung simuliert werden. Hierfür bietet sich insbesondere das über das Netzwerk 4 mit der CNC-Steuerung 3 verbunden CAD/CAM-System 5 an. So kann beispielsweise bereits vor der eigentlichen Vermessung des Werkstücks geprüft werden, ob die für die Vermessung vorgesehenen Bereiche der Oberfläche des Werkstücks 16 überhaupt für den Messtaster 21 zugänglich sind. Vorteilhaft können damit geeignete Abstandsund Auslenkpfade ermittelt und überprüft werden.

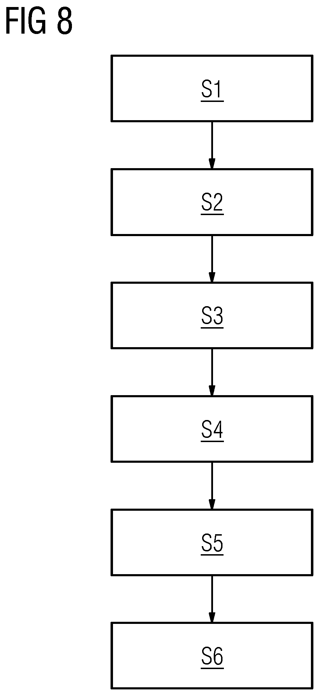

Nachfolgend werden die wesentlichen Verfahrensschritte bei der Durchführung eines erfindungsgemäßen Verfahrens nochmals in Form eines Ablaufdiagramms gemäß FIG 8 verdeutlicht, wobei auch hier wieder auf die vorherigen Figuren Bezug genommen wird.

In einem ersten Verfahrensschritt S1 wird ein Werkstück 16 in eine Werkstückaufnahme (Werkstückhalter 15) einer Werkzeugmaschine 2 eingespannt und mittels eines in eine Werkzeugspindel 11 oder einen Werkzeughalter 12 der Werkzeugmaschine 2 eingespanntes Werkzeug 13 bearbeitet. Hierzu werden lagegeregelte Achsen (X, Y, Z, B, C) der Werkzeugmaschine 2 verfahren und dadurch das Werkzeug 13 relativ zu dem Werkstück 16 bewegt. Die Steuerung der lagegeregelten Achsen (X, Y, Z, B, C) erfolgt mittels einer Steuereinrichtung, insbesondere einer numerischen bzw. CNC-Steuerung 3, die dafür ein vorgegebenes Programm (Teileprogramm) abarbeitet.

In einem zweiten Verfahrensschritt S2 wird das Werkzeug 13 ausgetauscht und ein Messtaster 21 in die Werkzeugmaschine 2, insbesondere in die Werkzeugspindel 11 oder den Werkzeughalter 12 eingespannt, wobei es sich bei dem Messtaster 21 um einen taktilen, schaltenden Messtaster handelt, der an seinem dem Werkstück 16 zugewandten Ende ein Antastformelement, insbesondere eine Messkugel 22 oder eine Messspitze aufweist. Das in Verfahrensschritt S1 bearbeitete und nun zu vermessende Werkstück 16 befindet sich bereits in der Werkstückaufnahme (Werkstückhalter 15) der Werkzeugmaschine 2. Ein Umspannen (Überführen des Werkstücks 16 in eine Messmaschine) ist damit nicht erforderlich.

Analog zu dem Werkzeug 13 kann damit auch der Messtaster 21 relativ zu dem Werkstück 16 durch wenigstens eine lagegeregelte Achse (X, Y, Z, B, C) der Werkzeugmaschine 2 verfahren bzw. positioniert werden.

Ferner liefert der taktile, schaltende Messtaster 21 ein Schaltsignal, sobald das Antastformelement 22 ein Objekt, insbesondere das Werkstück 16 berührt und kein Schaltsignal, wenn das Antastformelement 22 kein Objekt berührt.

In einem dritten Verfahrensschritt S3 werden der der Werkzeugmaschine 2 zugeordneten Steuereinrichtung 3 Daten bezüglich einer Sollkontur 24 des Werkstücks 16 für wenigstens einen Bereich der Oberfläche des Werkstücks 16, ein erster Abstandswert Delta 1A sowie ein erster Auslenkwert Delta 1U hinterlegt. Die Steuereinrichtung 3 ermittelt sodann aus den Daten bezüglich der Sollkontur 24, dem Abstandswert Delta 1A und dem Auslenkwert Delta 1U wenigstens einen ersten Abstandspfad sowie wenigstens einen ersten Auslenkpfad, die jeweils um den Abstandswert Delta 1A bzw. den Auslenkwert Delta 1U von der Sollkontur 24 beabstandet sind.

In einem vierten Verfahrensschritt S4 gibt die Steuereinrichtung 3 der wenigstens einen lagegeregelten Achse X, Y, Z, B, C Sollwerte derart vor, dass sich das Antastformelement 22 entlang des ersten Abstandspfades um den ersten Abstandswert Delta 1A beabstandet von der Sollkontur 24 relativ zu dem Werkstück 16 bewegt. Kommt es aufgrund einer Abweichung zwischen der Sollkontur 24 und der Istkontur des Werkstücks 16 zu einer Berührung zwischen dem Messtaster 21, insbesondere der Messkugel 22, und der Werkstückoberfläche, so wird bei dem Messtaster 21 ein Schaltsignal erzeugt und der Steuereinrichtung 3 zugeführt, die dadurch ein Aufmaß des Werkstücks 16 in dem gemessenen Bereich der Werkstückoberfläche erkennt.

In einem fünften Verfahrensschritt S5 gibt die Steuereinrichtung 3 der wenigstens einen lagegeregelten Achse X, Y, Z, B, C Sollwerte derart vor, dass sich das Antastformelement (Messkugel 22) entlang des ersten Auslenkpfades um den ersten Auslenkwert Delta 1U beabstandet von der Sollkontur 24 relativ zu dem Werkstück bewegen würde, derart, dass es in das Werkstück 16 eingreifen würde. Da jedoch ein Eingriff des Messtasters 21 in das Werkstück 16 nicht beabsichtigt bzw. möglich ist, bewegt sich der idealerweise um den Auslenkwert Delta 1U ausgelenkte und somit in Kontakt mit dem Werkstück 16 befindliche Messtaster 21, insbesondere das Antastformelement (die Messkugel 22) entlang der Oberfläche des Werkstücks 16. Kommt es aufgrund einer Abweichung zwischen der Sollkontur 24 und der Istkontur des Werkstücks 16 während dieser Bewegung zu einem Ende der Berührung zwischen dem Messtaster 21 (insbesondere der Messkugel 22) und der Werkstückoberfläche, so verliert der Messtaster 21 sein Schaltsignal, was von der Steuereinrichtung 3 registriert wird, die dadurch ein Untermaß des Werkstücks 16 in dem gemessenen Bereich der Werkstückoberfläche erkennt.

Stellt die Steuereinrichtung 3 weder in Verfahrensschritt S3 ein Aufmaß noch in Verfahrensschritt S5 ein Untermaß fest, so erkennt die Steuereinrichtung 3 in einem Verfahrensschritt S6, dass das Werkstück 16, zumindest im Bereich der untersuchten Sollkontur 24, den durch den ersten Abstandswert Delta 1A und den ersten Auslenkwert Delta 1U vorgegebenen Toleranz-Anforderungen entspricht bzw. andernfalls den vorgegebenen Toleranz-Anforderungen nicht entspricht. Gegebenenfalls gibt die Steuereinrichtung 3 eine entsprechende Nachricht an einen Benutzer der Werkzeugmaschine 2 bzw. der Steuereinrichtung 3 aus.

## Patentansprüche

1. Verfahren zum Überprüfen einer Kontur eines Werkstücks (16) mittels einer mit einer Steuereinrichtung (3) verbundenen Werkzeugmaschine (2),
- wobei ein schaltender Messtaster (21) in die Werkzeugmaschine (2) eingespannt ist,
- wobei der Messtaster (21) an seinem dem Werkstück (16) zugewandten Ende ein Antastformelement (22) aufweist,
- wobei das Antastformelement (22) mittels wenigstens einer lagegeregelten Achse (X, Y, Z, B, C) der Werkzeugmaschine (2) relativ zu dem Werkstück (16) positionierbar ist,
- wobei in der Steuereinrichtung (3) Daten bezüglich einer Sollkontur (24) des Werkstücks (16) für wenigstens einen Bereich der Oberfläche des Werkstücks (16), ein erster Abstandswert (Δ1A), der einen Abstand zwischen dem Antastformelement (22) und der Sollkontur (24) kennzeichnet, sowie ein erster Auslenkwert (Δ1U), der eine Auslenkung des Messtasters (21) beim Antasten der Oberfläche des Werkstücks (16) kennzeichnet, hinterlegt sind,
- **dadurch gekennzeichnet, dass** die Steuereinrichtung (3) aus den Daten bezüglich der Sollkontur (24), dem Abstandswert (Δ1A) und dem Auslenkwert (Δ1U) wenigstens einen ersten Abstandspfad sowie wenigstens einen ersten Auslenkpfad ermittelt, die dem Antastformelement (22) des Messtasters (21) als Verfahrweg vorgebbar sind,
- wobei das Antastformelement (22) des Messtasters (16), entlang des ersten Abstandspfades verfahren wird,
- wobei dem Antastformelement (22) des Messtasters (21) der erste Auslenkpfad als Verfahrweg vorgegeben und der Messtaster (21) verfahren wird,
- wobei die Steuereinrichtung (3) eine Verletzung der Sollkontur (24) feststellt, wenn das Antastformelement (22) des Messtasters (21) beim Verfahren entlang des ersten Abstandspfades wenigstens in einem Punkt (P12) des ersten Abstandspfades das Werkstück (16) berührt und der Messtaster (21) infolgedessen ein Schaltsignal erzeugt
- und/oder beim Verfahren des Messtasters (21) mit vorgegebenem ersten Auslenkpfad das Antastformelement (22) des Messtasters (21) wenigstens in einem Punkt (P23) des ersten Abstandspfades das Werkstück (16) nicht berührt und der Messtaster (21) infolgedessen kein Schaltsignal erzeugt.

2. Verfahren nach Anspruch 1, wobei dem Überprüfen der Kontur eine Bearbeitung des Werkstücks (16) mittels der Werkzeugmaschine (2) vorausgegangen ist.

3. Verfahren nach einem der vorherigen Ansprüche, wobei das Antastformelement (22) als Messkugel (22), Messzylinder oder Messspitze ausgebildet ist.

4. Verfahren nach einem der vorherigen Ansprüche, wobei als erster Abstandswert (Δ1A) und als erster Auslenkwert (Δ1U) derselbe Wert eingestellt wird.

5. Verfahren nach einem der vorherigen Ansprüche, wobei der erste Abstandswert (Δ1A) und/oder der erste Auslenkwert (Δ1U) bezüglich einer vorgebbaren Richtung eingestellt werden.

6. Verfahren nach einem der vorherigen Ansprüche, wobei der erste Abstandswert (Δ1A) und/oder der erste Auslenkwert (Δ1U) bezüglich einer jeweiligen Oberflächennormalen der Sollkontur (24) des Werkstücks (16) entlang des vorgegebenen ersten Abstandspfades bzw. ersten Auslenkpfades eingestellt wird bzw. werden.

7. Verfahren nach einem der vorherigen Ansprüche, wobei der erste Abstandspfad entlang einer positiven Pfadrichtung und anschließend der erste Auslenkpfad entlang einer negativen Pfadrichtung abgefahren wird.

8. Verfahren nach einem der vorherigen Ansprüche, wobei die Sollkontur (24) mehrmals entlang mehrerer vorgegebener Auslenkpfade mit unterschiedlichen, durch unterschiedliche Abstandswerte (Δ2A, A3A, Δ4A) vorgegebenen Abständen zwischen Werkstückoberfläche und Antastformelement (22), mit dem Messtaster (21) abgefahren wird.

9. Verfahren nach einem der vorherigen Ansprüche, wobei die Sollkontur (24) mehrmals entlang mehrerer vorgegebener Auslenkpfade mit unterschiedlichen, durch unterschiedliche Auslenkwerte (Δ2U, Δ3U, Δ4U) vorgegebenen Auslenkungen mit dem zur Sollkontur (24) hin ausgelenkten Messtaster (21) abgefahren wird.

10. Verfahren nach Anspruch 8 oder 9, wobei die Abstandswerte (Δ2A, A3A, Δ4A) und/oder die Auslenkwerte (Δ2U, Δ3U, Δ4U) zwischen aufeinanderfolgenden Fahrten verkleinert werden.

11. Verfahren nach einem der Ansprüche 1 bis 7, wobei für den Fall, dass beim Verfahren des Antastformelements (22) entlang des ersten Abstandspfades mit dem durch den ersten Abstandswert (Δ5A) vorgegebenen Abstand in einem Punkt (P31) des ersten Abstandspfades eine Berührung des Antastformelements (22) mit dem Werkstück (16) registriert wird, der Abstand zwischen dem Antastformelement (22) und der Sollkontur (24) auf einen vorgegebenen zweiten Abstandswert (Δ6A) vergrößert wird und das Antastformelement (22) entlang eines zweiten Abstandspfades mit dem durch den zweiten Abstandswert (Δ6A) vorgegebenen Abstand zur Sollkontur (24) verfahren wird.

12. Verfahren nach Anspruch 11, wobei der Abstand zwischen dem Antastformelement (22) und der Sollkontur (24) bei jeder weiteren Berührung des Antastformelements (22) mit dem Werkstück (16) auf einen weiteren vorgegebenen Abstandswert (Δ7A, Δ8A) vergrößert wird und das Antastformelement (22) entlang eines weiteren Abstandspfades mit dem durch den weiteren Abstandswert (Δ7A, Δ8A) vorgegebenen Abstand zur Sollkontur (24) verfahren wird, solange, bis das Ende der abzufahrenden Sollkontur (24) erreicht ist.

13. Verfahren nach Anspruch 11 oder 12, wobei der zweite bzw. der zuletzt geltende Abstandswert (Δ8A) als Aufmaß des Werkstücks (16) gespeichert wird.

14. Verfahren nach einem der Ansprüche 1 bis 7, wobei für den Fall, dass der Messtaster (21) beim Abfahren der Sollkontur (24) mit der durch den ersten Auslenkwert (Δ5U) vorgegebenen Auslenkung in einem ersten Punkt (P41) der Sollkontur (24) sein Schaltsignal verliert, die Auslenkung des Messtasters (21) in Bezug auf die Sollkontur (24) auf einen vorgegebenen zweiten Auslenkwert (Δ6U) vergrößert wird und die Sollkontur (24) weiter mit der durch den zweiten Auslenkwert (Δ6U) vorgegebenen Auslenkung des Messtasters (21) abgefahren wird.

15. Verfahren nach Anspruch 14, wobei die Auslenkung des Messtasters (21) in Bezug auf die Sollkontur (24) bei jedem weiteren Verlust des Schaltsignals auf einen weiteren vorgegebenen Auslenkwert (Δ7U) vergrößert wird und die Sollkontur (24) weiter mit der durch den jeweils weiteren Auslenkwert (Δ7U) vorgegebenen Auslenkung abgefahren wird, solange, bis das Ende der abzufahrenden Sollkontur (24) erreicht ist.

16. Verfahren nach Anspruch 14 oder 15, wobei der zweite bzw. der zuletzt geltende Auslenkwert (Δ7U) als Untermaß des Werkstücks (16) gespeichert wird.

17. Werkzeugmaschinensystem (1) zum Überprüfen einer Kontur eines Werkstücks (5), umfassend eine Werkzeugmaschine (2) zur Bearbeitung des Werkstücks, eine mit der Maschine verbundene Steuereinrichtung sowie einem in eine Werkzeugaufnahme der Maschine eingespannten, schaltenden Messtaster mit einem Antastformelement,
- wobei ein schaltender Messtaster (21) in die Werkzeugmaschine (2) eingespannt ist,
- wobei der Messtaster (21) an seinem dem Werkstück (16) zugewandten Ende ein Antastformelement (22) aufweist,
- wobei das Antastformelement (22) mittels wenigstens einer lagegeregelten Achse (X, Y, Z, B, C) der Werkzeugmaschine (2) relativ zu dem Werkstück (16) positionierbar ist,
- **dadurch gekennzeichnet, dass** in der Steuereinrichtung (3) Daten bezüglich einer Sollkontur (24) des Werkstücks (16) für wenigstens einen Bereich der Oberfläche des Werkstücks (16), ein erster Abstandswert (Δ1A), der einen Abstand zwischen dem Antastformelement (22) und der Sollkontur (24) kennzeichnet, sowie ein erster Auslenkwert (Δ1U), der eine Auslenkung des Messtasters (21) beim Antasten der Oberfläche des Werkstücks (16) kennzeichnet, hinterlegt sind,
- wobei die Steuereinrichtung (3) aus den Daten bezüglich der Sollkontur (24), dem Abstandswert (Δ1A) und dem Auslenkwert (Δ1U) wenigstens einen ersten Abstandspfad sowie wenigstens einen ersten Auslenkpfad ermittelt, die dem Antastformelement (22) des Messtasters (21) als Verfahrweg vorgebbar sind,
- wobei die Steuereinrichtung (3) das Antastformelement (22) des Messtasters (16), entlang des ersten Abstandspfades verfährt,
- wobei die Steuereinrichtung (3) dem Antastformelement (22) des Messtasters (21) den ersten Auslenkpfad als Verfahrweg vorgibt und den Messtaster (21) verfährt,
- wobei die Steuereinrichtung (3) eine Verletzung der Sollkontur (24) feststellt, wenn das Antastformelement (22) des Messtasters (21) beim Verfahren entlang des ersten Abstandspfades wenigstens in einem Punkt (P12) des ersten Abstandspfades das Werkstück (16) berührt und der Messtaster (21) infolgedessen ein Schaltsignal erzeugt
- und/oder beim Verfahren des Messtasters (21) mit vorgegebenem ersten Auslenkpfad das Antastformelement (22) des Messtasters (21) wenigstens in einem Punkt (P23) des ersten Abstandspfades das Werkstück (16) nicht berührt und der Messtaster (21) infolgedessen kein Schaltsignal erzeugt.

18. Digitaler Zwilling eines Werkzeugmaschinensystems (1) nach Anspruch 17 zur Simulation eines Verfahrens nach einem der Ansprüche 1 bis 16.

## Claims

1. Method for checking a contour of a workpiece (16) by means of a machine tool (2) connected to a control facility (3),
- wherein a switching touch probe (21) is clamped into the machine tool (2),
- wherein the touch probe (21) has a shaped probe element (22) at its end facing toward the workpiece (16),
- wherein the shaped probe element (22) is able to be positioned relative to the workpiece (16) by means of at least one position-controlled axis (X, Y, Z, B, C) of the machine tool (2),
- wherein data regarding a required contour (24) of the workpiece (16) for at least one area of the surface of the workpiece (16), a first distance value (Δ1A), which characterises a distance between the shaped probe element (22) and the required contour (24), as well as a first deflection value (Δ1U), which characterises a deflection of the touch probe (21) on contact with the surface of the workpiece (16), is stored in the control facility (3),
- **characterised in that** the control facility (3) establishes from the data regarding the required contour (24), the distance value (Δ1A) and the deflection value (Δ1U) at least one first distance path as well as at least one first deflection path, which can be specified to the shaped probe element (22) of the touch probe (21) as a movement path,
- wherein the shaped probe element (22) of the touch probe (16) is moved along the first distance path,
- wherein the first deflection path is predetermined to the shaped probe element (22) of the touch probe (21) as the movement path and the touch probe (21) is moved,
- wherein the control facility (3) determines a violation of the required contour (24) when the shaped probe element (22) of the touch probe (21), on moving along the first distance path, touches the workpiece (16) at least at one point (P12) of the first distance path and the touch probe (21) generates a switching signal as a result
- and/or on movement of the touch probe (21) with the predetermined first deflection path, the shaped probe element (22) of the touch probe (21), at least at one point (P23) of the first distance path, does not touch the workpiece (16) and the touch probe (21) does not generate any switching signal as a result.

2. Method according to claim 1, wherein the checking of the contour is preceded by a machining of the workpiece (16) by means of the machine tool (2).

3. Method according to one of the preceding claims, wherein the shaped probe element (22) is embodied as a measuring sphere (22), measuring cylinder or measuring tip.

4. Method according to one of the preceding claims, wherein the same value is set as a first distance value (Δ1A) and as a first deflection value (Δ1U).

5. Method according to one of the preceding claims, wherein the first distance value (Δ1A) and/or the first deflection value (Δ1U) are set with regard to a predeterminable direction.

6. Method according to one of the preceding claims, wherein the first distance value (Δ1A) and/or the first deflection value (Δ1U) is or are set with regard to a respective surface normal of the required contour (24) of the workpiece (16) along the predetermined first distance path or first deflection path.

7. Method according to one of the preceding claims, wherein the first distance path is traced in a positive path direction and subsequently the first deflection path is traced in a negative path direction.

8. Method according to one of the preceding claims, wherein the probe (21) is used to trace the required contour (24) a number of times along a number of predetermined deflection paths with different distances, predetermined by different distance values (Δ2A, A3A, Δ4A),between workpiece surface and shaped probe element (22).

9. Method according to one of the preceding claims, wherein the touch probe (21), deflected toward the required contour (24), is used to trace the required contour (24) a number of times along a number of predetermined deflection paths with different deflections predetermined by different deflection values (Δ2U, A3U, Δ4U).

10. Method according to claim 8 or 9, wherein the distance values (Δ2A, A3A, Δ4A) and/or the deflection values (Δ2U, A3U, Δ4U) are reduced between consecutive runs.

11. Method according to one of claims 1 to 7 wherein, for the case in which, on movement of the shaped probe element (22) along the first distance path with the distance predetermined by the first distance value (Δ5A), at a point (P31) of the first distance path, contact between the shaped probe element (22) and the workpiece (16) is registered, the distance between the shaped probe element (22) and the required contour (24) is increased to a predetermined second distance value (Δ6A) and the shaped probe element (22) is moved along a second distance path with the distance, predetermined by the second distance value (Δ6A), to the required contour (24).

12. Method according to claim 11, wherein the distance between the shaped probe element (22) and the required contour (24) is increased to a further predetermined distance value (Δ7A, Δ8A) on each further contact between the shaped probe element (22) and the workpiece (16) and the shaped probe element (22) is moved along a further distance path with the distance, predetermined by the further distance value (Δ7A, Δ8A), to the required contour (24) until such time as the end of the required contour (24) to be traced is reached.

13. Method according to claim 11 or 12, wherein the second or the last applicable distance value (Δ8A) is stored as the oversize of the workpiece (16).

14. Method according to one of claims 1 to 7, wherein for the case in which the touch probe (21), on tracing the required contour (24) with the deflection, predetermined by the first deflection value (Δ5U), loses its switching signal at a first point (P41) of the required contour (24), the deflection of the touch probe (21) with regard to the required contour (24) is increased to a predetermined second deflection value (Δ6U) and the required contour (24) is further traced with the deflection, predetermined by the second deflection value (Δ6U), of the touch probe (21).

15. Method according to claim 14, wherein the deflection of the touch probe (21) with regard to the required contour (24) is increased to a further predetermined deflection value (Δ7U) on each further loss of the switching signal and the required contour (24) is moved further along with the deflection predetermined by the respective further deflection value (Δ7U) until such time as the end of the required contour (24) to be moved along is reached.

16. Method according to claim 14 or 15, wherein the second or the last applicable deflection value (Δ7U) is stored as the undersize of the workpiece (16).

17. Machine tool system (1) for checking a contour of a workpiece (5), comprising a machine tool (2) for machining of the workpiece, a control facility connected to the machine and also a switching touch probe with a shaped probe element clamped in a tool receptacle of the machine,
- wherein a switching touch probe (21) is clamped into the machine tool (2),
- wherein the touch probe (21) has a shaped probe element (22) at its end facing towards the workpiece (16),
- wherein the shaped probe element (22) is able to be positioned relative to the workpiece (16) by means at least one position-controlled axis (X, Y, Z, B, C) of the machine tool (2),
- **characterised in that** data with regard to a required contour (24) of the workpiece (16) for at least one area of the surface of the workpiece (16), a first distance value (Δ1A), which characterises a distance between the shaped probe element (22) and the required contour (24), and also a first deflection value (Δ1U), which characterises a deflection of the touch probe (21) when probing the surface of the workpiece (16) is stored in the control facility (3),
- wherein the control facility (3) establishes from the data regarding the required contour (24), the distance value (Δ1A) and the deflection value (Δ1U) at least one first distance path as well as at least one first deflection path, which are able to be specified to the shaped probe element (22) of the touch probe (21) as the movement path,
- wherein the control facility (3) moves the shaped probe element (22) of the touch probe (16), along the first distance path,
- wherein the control facility (3) specifies to the shaped probe element (22) of the touch probe (21) the first deflection path as the movement path and moves the touch probe (21),
- wherein the control facility (3) determines a violation of the required contour (24) when the shaped probe element (22) of the touch probe (21), when moving along the first distance path, at at least one point (P12) of the first distance path, comes into contact with the workpiece (16) and the touch probe (21) generates a switching signal as a result
- and/or, when moving the touch probe (21) with a predetermined first deflection path, the shaped probe element (22) of the touch probe (21), at at least one point (P23) of the first distance path, does not come into contact with the workpiece (16) and the touch probe (21) does not generate a switching signal as a result.

18. A digital twin of a machine tool system (1) according to claim 17 for simulation of a method according to one of claims 1 to 16.

## Revendications

1. Procédé de contrôle d'un contour d'une pièce (16) au moyen d'une machine-outil (2), reliée à un dispositif (3) de commande,
- dans lequel un palpeur (21) de mesure se mettant en circuit est monté dans la machine-outil (2),
- dans lequel le palpeur (21) de mesure a un élément (22) de forme de palpage à son extrémité tournée vers la pièce (16),
- dans lequel l'élément (22) de forme de palpage peut être mis en position par rapport à la pièce (16), au moyen d'un axe (X, Y, Z, B, C) réglé en position de la machine-outil (2),
- dans lequel dans le dispositif (3) de commande, sont mises en mémoire des données en ce qui concerne un contour (24) de consigne de la pièce (16) pour au moins une partie de la surface de la pièce (16), une première valeur (Δ1A) de distance, qui caractérise une distance entre l'élément (22) de forme de palpage et le contour (24) de consigne, ainsi qu'une première valeur (Δ1U) de déviation, qui caractérise une déviation du palpeur (21) de mesure, lors du palpage de la surface de la pièce (16),
- **caractérisé en ce que** le dispositif (3) de commande détermine, à partir des données concernant le contour (24) de consigne, de la valeur (Δ1A) de distance et de la valeur (Δ1U) de déviation, au moins un premier chemin de distance, ainsi qu'au moins un premier chemin de déviation, qui peuvent être prescrits comme trajet de déplacement à l'élément (22) de forme de palpage du palpeur (21) de mesure,
- dans lequel on déplace l'élément (22) de forme de palpage du palpeur (16) de mesure le long du premier chemin de distance,
- dans lequel on prescrit à l'élément (22) de forme de palpage du palpeur (21) de mesure le premier chemin de déplacement comme trajet de déplacement et on déplace le palpeur (21) de mesure,
- dans lequel le dispositif (3) de commande constate une atteinte au contour (24) de consigne, si l'élément (22) de forme de palpage du palpeur (21) de mesure touche la pièce (16), lors du déplacement le long du premier chemin de distance en au moins un point (P12) du premier chemin de distance et si en conséquence le palpeur (21) de mesure produit un signal d'arrêt,
- et/ou lors du déplacement du palpeur (21) de mesure avec un premier chemin de déviation donné à l'avance, l'élément (22) de forme de palpage du palpeur (21) de mesure ne touche pas la pièce (16) en au moins un point (P23) du premier chemin de distance et en conséquence le palpeur (21) de mesure ne produit pas un signal d'arrêt.

2. Procédé suivant la revendication 1, dans lequel un usinage de la pièce (16) au moyen de la machine-outil (2) précède le contrôle du contour.

3. Procédé suivant l'une des revendications précédentes, dans lequel l'élément (22) de forme de palpage est constitué sous la forme d'une bille (22) de mesure, d'un cylindre de mesure ou d'une pointe de mesure.

4. Procédé suivant l'une des revendications précédentes, dans lequel on règle la même valeur comme première valeur (Δ1A) de distance et comme première valeur (Δ1U) de déviation.

5. Procédé suivant l'une des revendications précédentes, dans lequel on règle la première valeur (Δ1A) de distance et/ou la première valeur (Δ1U) de déviation en ce qui concerne une direction pouvant être donnée à l'avance.

6. Procédé suivant l'une des revendications précédentes, dans lequel on règle la première valeur (Δ1A) de distance et/ou la première valeur (Δ1U) de déviation en ce qui concerne une normale respective à la surface du contour (24) de consigne de la pièce (16) le long du premier chemin de distance donné à l'avance ou du premier chemin de déviation donné à l'avance.

7. Procédé suivant l'une des revendications précédentes, dans lequel on parcourt le premier chemin de distance suivant un sens positif du chemin et ensuite le premier chemin de déviation suivant un sens négatif du chemin.

8. Procédé suivant l'une des revendications précédentes, dans lequel on parcourt le contour (24) de consigne par le palpeur (21) de mesure plusieurs fois le long de plusieurs chemins de déviation donnés à l'avance avec des distances différentes données à l'avance par des valeurs (Δ2A, Δ3A, Δ4A) de distance différentes entre surface de la pièce et élément (22) de forme de palpage.

9. Procédé suivant l'une des revendications précédentes, dans lequel on parcourt par le palpeur (21) de mesure, dévié par rapport au contour (24) de consigne, le contour (24) de consigne plusieurs fois le long de plusieurs chemins de déviation donnés à l'avance ayant des déviations différentes données à l'avance par des valeurs (Δ2U, A3U, Δ4U) de déviation différentes.

10. Procédé suivant la revendication 8 ou 9, dans lequel on diminue les valeurs (Δ2A, Δ3A, Δ4A) de distance et/ou les valeurs (Δ2U, A3U, Δ4U) de déviation entre des circulations successives.

11. Procédé suivant l'une des revendications 1 à 7, dans lequel, dans le cas où lors du déplacement de l'élément (22) de forme de palpage le long du premier chemin de distance avec la distance donnée à l'avance par la première valeur (Δ5A) de distance, on enregistre en un point (P31) du premier chemin de distance un contact de l'élément (22) de forme de palpage avec la pièce (16), on agrandit la distance entre l'élément (22) de forme de palpage et le contour (24) de consigne jusqu'à une deuxième valeur (Δ6A) de distance donnée à l'avance et on déplace l'élément (22) de forme de palpage le long d'un deuxième chemin de distance avec la distance, donnée à l'avance par la deuxième valeur (Δ6A) de distance, au contour (24) de consigne.

12. Procédé suivant la revendication 11, dans lequel on agrandit la distance entre l'élément (22) de forme de palpage et le contour (24) de consigne à chaque autre contact de l'élément (22) de forme de palpage avec la pièce (16) à une autre valeur (Δ7A, Δ8A) de distance donnée à l'avance et on déplace l'élément (22) de forme de palpage le long d'un autre chemin de distance avec la distance donnée à l'avance par l'autre valeur (Δ7A, Δ8A) de distance par rapport au contour (24) de consigne jusqu'à ce que la fin du contour (24) de consigne à parcourir soit atteinte.

13. Procédé suivant la revendication 11 ou 12, dans lequel on met en mémoire comme mesure de la pièce (16) la deuxième ou la valeur (Δ8A) de distance valant en dernier.

14. Procédé suivant l'une des revendications 1 à 7, dans lequel dans le cas où le palpeur (21) de mesure, lors du parcours du contour (24) de consigne avec la déviation donnée à l'avance par la première valeur (Δ5U) de déviation, perd dans un premier point (P41) du contour (24) de consigne son signal d'arrêt, on agrandit la déviation du palpeur (21) de mesure par rapport au contour (24) de consigne à une deuxième valeur (Δ6U) de déviation donnée à l'avance et on continue à parcourir le contour (24) de consigne avec la déviation, donnée à l'avance par la deuxième valeur (Δ6U) de déviation, du palpeur (21) de mesure.

15. Procédé suivant la revendication 14, dans lequel on agrandit la déviation du palpeur (21) de mesure par rapport au contour (24) de consigne à chaque autre perte du signal d'arrêt jusqu'à une valeur (Δ7U) de déviation donnée à l'avance et on continue à parcourir le contour (24) de consigne avec la déviation donnée à l'avance par l'autre valeur (Δ7U) de déviation jusqu'à ce que la fin du contour (24) de consigne à parcourir soit atteinte.

16. Procédé suivant la revendication 14 ou 15, dans lequel on met en mémoire la deuxième ou la valeur (Δ7U) de déviation valant en dernier comme dimension inférieure à la cote prescrite de la pièce (16).

17. Système (1) de machine-outil pour le contrôle d'un contour d'une pièce (5), comprenant une machine-outil (2) d'usinage de la pièce, ainsi qu'un palpeur de mesure se mettant en circuit, monté dans un logement d'outil de la machine et ayant un élément de forme de palpage,
- dans lequel un palpeur (21) de mesure, se mettant en circuit, est monté dans la machine-outil (2),
- dans lequel le palpeur (21) de mesure a un élément (22) de forme de palpage à son extrémité tournée vers la pièce (16),
- dans lequel l'élément (22) de forme de palpage peut, au moyen d'au moins un axe (X, Y, Z, B, C) réglé en position de la machine-outil (2), être mis en position par rapport à la pièce (16),
- **caractérisé en ce que**
dans le dispositif (3) de commande, sont mises en mémoire des données en ce qui concerne un contour (24) de consigne de la pièce (16) pour au moins une partie de la surface de la pièce (16), une première valeur (Δ1A) de distance, qui caractérise une distance entre l'élément (22) de forme de palpage et le contour (24) de consigne, ainsi qu'une première valeur (Δ1U) de déviation, qui caractérise une déviation du palpeur (21) de mesure, lors du palpage de la surface de la pièce (16),
- dans lequel le dispositif (3) de commande détermine, à partir des données concernant le contour (24) de consigne, de la valeur (Δ1A) de distance et de la valeur (Δ1U) de déviation, au moins un premier chemin de distance, ainsi qu'au moins un premier chemin de déviation, qui peuvent être donnés à l'avance comme trajet de déplacement à l'élément (22) de forme de palpage du palpeur (21) de mesure,
- dans lequel le dispositif (3) de commande déplace l'élément (22) de forme de palpage du palpeur (16) de mesure le long du premier chemin de distance,
- dans lequel le dispositif (3) de commande prescrit à l'élément (22) de forme de palpage du palpeur (21) de mesure le premier chemin de déviation comme trajet de déplacement et déplace le palpeur (21) de mesure,
- dans lequel le dispositif (3) de commande constate une atteinte au contour (24) de consigne, si l'élément (22) de forme de palpage du palpeur (21) de mesure touche, lors du déplacement suivant le premier chemin de distance, la pièce (16) au moins en un point (P12) du premier chemin de distance, et le palpeur (21) de mesure produit en conséquence un signal d'arrêt,
- et/ou, lors du déplacement du palpeur (21) de mesure avec un premier chemin de déviation donné à l'avance, l'élément (22) de forme de palpage du palpeur (21) de mesure ne touche pas la pièce (16) au moins en un point (P23) du premier chemin de distance et le palpeur (21) de mesure ne produit pas en conséquence de signal d'arrêt.

18. Double numérique d'un système (1) de machine-outil suivant la revendication 17 pour la simulation d'un procédé suivant l'une des revendications 1 à 16.
